# EUROPEAN PATENT SPECIFICATION

(11) **EP 2 314 952 B1**
(45) Date of publication and mention of the grant of the patent: **14.09.2016**
(21) Application number: 09382215.3
(22) Date of filing: 19.10.2009
(51) Int. Cl.: F24J 2/52

(54) **System for affixing solar panels**
System zum Befestigen von Sonnenkollektoren
Système de fixation de panneaux solaires

(43) Date of publication of application: 27.04.2011
(73) Proprietor: Aluminios La Serena, S.A., 06700 Villanueva de la Serena (ES)
(72) Inventor: Suarez Rayo, Miguel, 06700 Villanueva de la Serena (ES)
(74) Representative: Capitán García, Maria Nuria

(56) References cited:
- EP-A2- 2 109 152
- EP-A2- 2 427 701
- WO-A2-2010/014754
- DE-U1- 9 013 951
- DE-U1-202005 003 750
- DE-U1-202008 001 010
- DE-U1-202008 013 414
- JP-A- 2003 035 016
- US-A1- 2008 302 356

## Description

### OBJECT OF THE INVENTION

This invention refers to a system for affixing solar panels. The system described in this invention is used essentially as a structure for supporting and affixing solar panels.

Such systems typically comprise at least the following elements:
Support elements which include means of connection to the surface on which the frame is placed, and means of connection to profiles which define planes parallel to the plane of the solar panels.
Profiles which define planes parallel to the plane of the solar panels joined to support elements which comprise sliding connection means which permit sliding of the profiles with respect to the support elements and means for positioning the solar panels.

The foregoing configuration is formed by means of profiles and elements which are generally metallic which permits a totally modular frame, enabling it to be adapted to any dimension of solar panel, being provided with means which permit optimisation of the panels' performance.

### BACKGROUND TO THE INVENTION

Frames designed to support and affix solar panels are known in the art.

These frames are normally formed on the basis of metallic profiles thus serving as structural support for the solar panel. In addition to the structural function of the frames, they also permit the positioning of the panels with the appropriate inclination in order to maximize performance.

Nevertheless, the frames known to date are manufactured based on the specific type of solar panel and the optimum performance requirements thereof. As a result each frame is made specifically for a particular type of solar panel and a specific use thereof.

The system described in this invention has a totally modular system, formed on the basis of profiles, generally metallic, which are provided with means of connection which permit the configuration thereof on the basis of the dimensions of the solar panel or panels to be supported and on their' optimum performance requirements. In addition to the foregoing advantages, the fact that it is formed from metallic profiles and elements ensures that mounting and installation is simplified, as it is only necessary to cut the profiles according to the adequate dimensions and assemble them, thus reducing associated transport costs.

Therefore, costs are reduced as well as providing a product totally adaptable to the requirements of the solar panels designed to be fitted thereon.

Document DE202005003750 U1 discloses a system for affixing solar panels comprising at least the following elements:
Support elements which include means of connection to the surface on which the frame is placed, and means of connection to profiles which define planes parallel to the plane of the solar panels.
Profiles which define planes parallel to the plane of the solar panels joined to support elements which comprise sliding connection means which permit sliding of the profiles with respect to the support elements and means for positioning the solar panels.

Document JP2003035016 A discloses a system for affixing solar panels wherein the profiles which define planes parallel to the plane of the solar panels comprise longitudinal profiles and transversal profiles with longitudinal profiles joined to the support elements by sliding connection means which permit sliding of the longitudinal profiles with respect to the support elements and the transversal profiles joined to the longitudinal profiles by sliding connection means which permit transversal sliding of the transversal profiles with respect to the longitudinal profiles and provided with means for positioning the solar panels.

### DESCRIPTION OF THE INVENTION

The system for affixing solar panels which is the object of the invention is formed by an arrangement of profiles and elements, generally metallic, which are arranged joined together by connection means which permit the system to be modular as well as totally adaptable to the dimensions of the panels to be situated on said system permitting the panels to be placed in such a way that maximum performance of the panels is obtained.

The modularity of the frame permits all these operations to be carried out during the mounting in situ of the frame, with the resulting advantages that this entails.

The system which is the object of this invention is defined by the features of claim 1. Amongst others, it comprises the following elements:
Support elements which include means of connection to the surface on which the frame is placed and provided with means of connection to profiles which define planes parallel to the plane of the solar panels.

The various embodiments of the supporting connection elements permit the frame to be situated on various types of surface, which permits optimum conditions for the solar panel performance obtainable on all types of surface.
Profiles which define planes parallel to the plane of the solar panels joined to support elements which include sliding connection means which permit sliding of the profiles with respect to the support elements and means for positioning the solar panels.

In this way it is ensured that the profiles are not provided with connection points to the surface connection elements in specific positions but instead the connection can be made at any point of the profiles, thus achieving a totally modular frame.

### DESCRIPTION OF THE DRAWINGS

The present descriptive report is complemented by a set of plans illustrating preferred embodiments of the invention but which is in no way restrictive.
Figure 1 shows a perspective diagram of an embodiment of the system which is the object of this invention which permits the situation of at least two solar panels.
Figure 2 shows a diagram of a partial lateral view of the system of the preferred embodiment illustrated in figure 1.
Figure 3 shows a cross section diagram of a possible preferred embodiment of the longitudinal profile corresponding to the embodiment of figure 1.
Figure 4 shows a diagram of a lateral view of another preferred embodiment of the system illustrated in figure 1.
Figure 5 shows a diagram of a lateral view of a preferred embodiment of the invention in which the system for affixing solar panels which is the object of the invention is situated on a slab on a tiled roof.
Figure 6 shows a diagram of a lateral view of a preferred embodiment of the invention differing from that shown in figure 5 in which the system for affixing solar panels which is the object of the invention is situated on a slab on a tiled roof.
Figure 7 shows a diagram of a lateral view of a preferred embodiment of the invention in which the system for affixing solar panels which is the object of the invention is situated on a trapezoidal roof.
Figure 8 shows a diagram of a lateral view of another preferred embodiment of the invention differing from that shown in figure 7 in which the system for affixing solar panels which is the object of the invention is situated on a trapezoidal roof.
Figure 9 shows a diagram of a lateral view of an embodiment of the invention in which means are provided which permit adjustment of the angle of inclination with respect to the surface of the solar panels.
Figure 10 shows a diagram of a lateral view of an embodiment of the invention differing from that shown in figure 9 in which means are provided which permit adjustment of the angle of inclination of the solar panels with respect to the surface.
Figure 11 shows a diagram of an embodiment of the invention in which means are provided for permitting the adjustment of the orientation of the solar panels.
Figures 12 to 17 show different profiles and accessories used in various situations.

### PREFERRED EMBODIMENT OF THE INVENTION

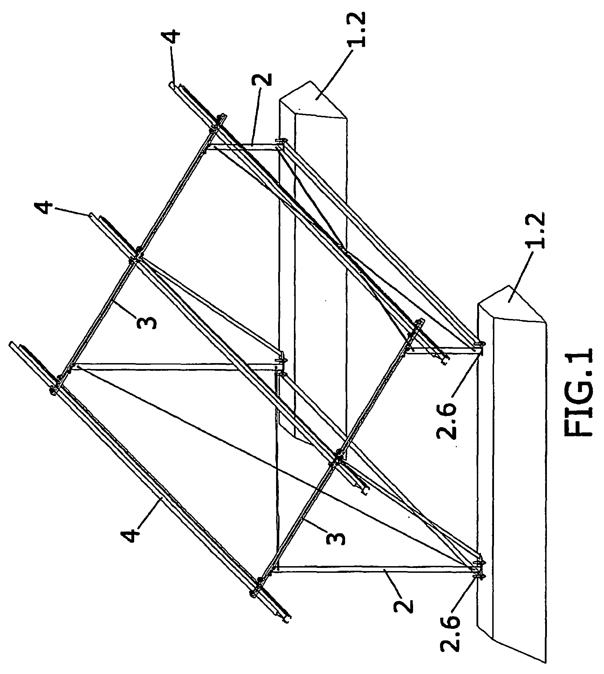

Figure 1 shows an embodiment of the system for affixing solar panels. The system consists of a frame which may be situated by affixing to a concrete base (1.2) on which the support elements (2) of the frame are affixed with the possibility of levelling and plumbing. In this embodiment the support elements (2) consist of profiles provided with connection means to the concrete base(1.2) which consist of perforated plates (2.6)

Longitudinal profiles (3) are situated on the support elements (2) on which, in turn, transversal profiles (4) are situated between which the solar panels (5) are finally placed.

Longitudinal profiles (3) comprise sliding connection means to the support elements (2) which permit longitudinal sliding with respect to the same (2) and sliding means of connection longitudinally to the transversal profiles (4).

The transversal profiles (4) also include transversally sliding means of connection permitting transversal sliding of the same (4) with respect to the longitudinal profiles (3),and in addition they are provided with means for positioning the solar panels (5).

In the embodiment shown in figure 1, the sliding connection means between the support elements (2) and the longitudinal profiles (3) comprise a guide/sliding mechanism. In this embodiment this mechanism is carried out with a combination of a guide housing in the longitudinal profile (3) and a sliding element solid to the support elements (2).

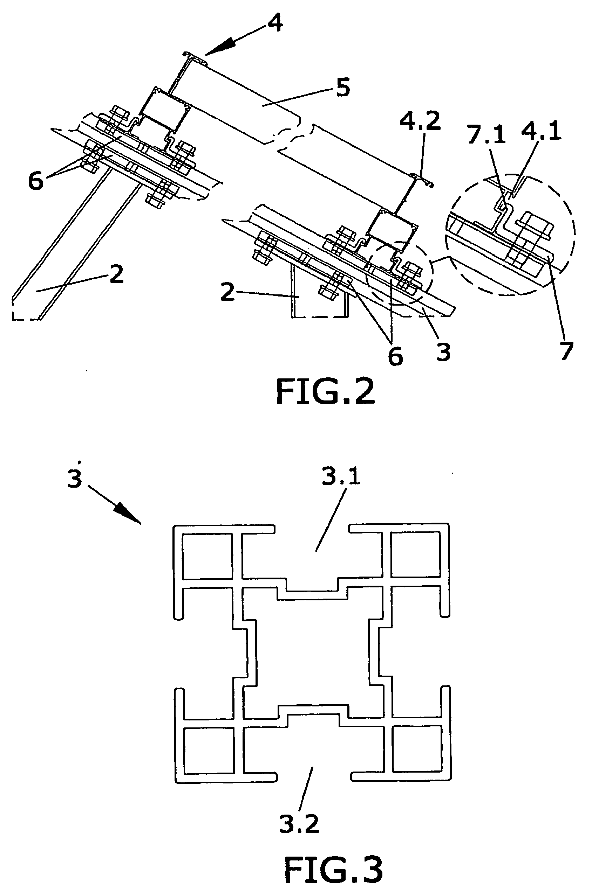

In the embodiment shown in the figures the longitudinal profiles (3), see figure 3, are provided with guide elements (3.1, 3.2).

The sliding element consists of a plate (6), see figure 2, which can slide in the guide housing (3.2) of the longitudinal profiles (3). This plate (6) is arranged joined to the corresponding support element (2). In the preferred embodiment this connection is made with bolts screwed to the plate (6).

Furthermore, the connection between the longitudinal profiles (3) and the transversal profiles (4) is sliding, both in the longitudinal and transversal directions. In the preferred embodiment, this connection is made in the same way as the connection between the support elements (2) and the longitudinal profiles (3), that is, by means of a combination of a guide housing (3.1) in the longitudinal profile (3) and a slide solid to the transversal profile (4).

For this purpose the sliding part is situated on a guide housing (3.1) of the longitudinal profile (3) and the slide is again a plate (6) which is inserted in the guide housing (3.1) and which is arranged joined to the transversal profile (4) so that it (4) may be displaced in longitudinal direction of the longitudinal profile (3).

In addition, the transversal profiles (4) also include means of connection with the longitudinal profiles (3) which permit transversal sliding between both profiles (3, 4).

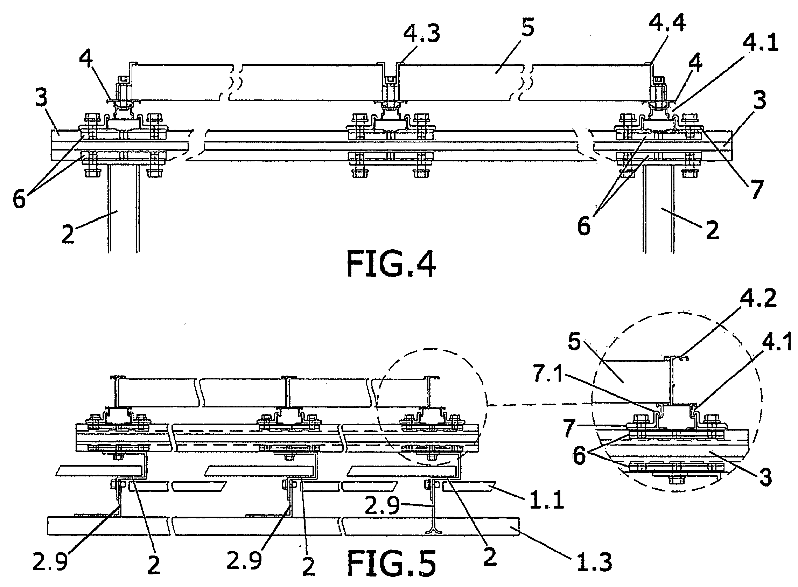

In the preferred embodiment these sliding connection means are also made through a guide/slide mechanism. For this purpose the transversal profiles (4) comprise in their lateral walls respective guide housings (4.1), see figures 2 and 4, with the slide in this case being an essentially L-shaped piece (7) which is provided with a flange (7.1) which is inserted in the guide housing (4.1). This essentially L-shaped part (7) is arranged joined to the longitudinal profile (3). In the preferred embodiment this connection is made by means of the intermediate plate (6) through bolted connections.

The transversal profiles (4) are also provided with means which permit the positioning of the ends of the solar panels (5). These means may consist of:
The preferred embodiment shown in figure 2 is a T-shaped extension (4.2) in which the solar panel (5) is housed. This type of transversal profile (4) has a considerable advantage in mounting and installation, as it permits the solar panels (5) to be fitted between the transversal profiles (4) with these being positioned and affixed, without the need to manipulate any of the bolted connections.
In the preferred embodiment shown in figure 4 the means for positioning the solar panels (5) comprise additional fractured pieces (4.3, 4.4) which, when joined to the transversal profile, (4)perform the positioning and fixation of the solar panels (5).

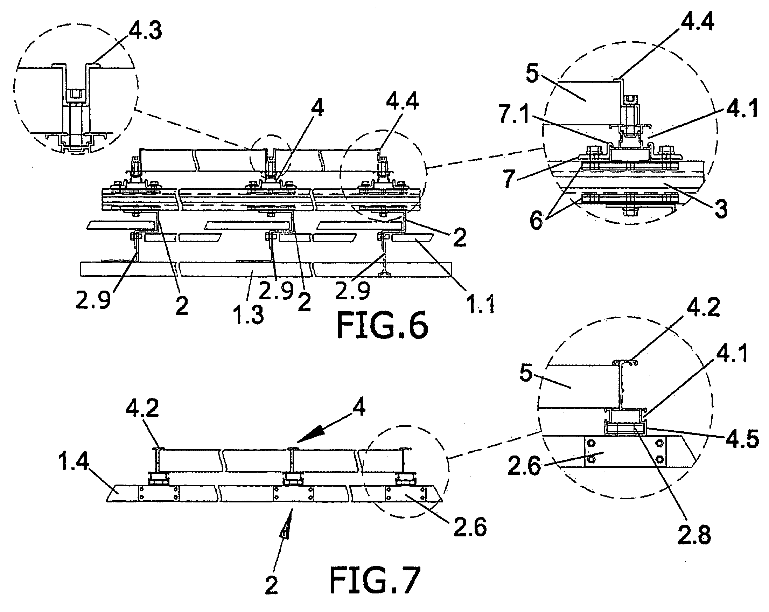

Figures 5 and 6 show two possible embodiments of the object of the invention in which the frame is situated on a slab (1.3) on a tiled roof (1.1).

In these embodiments the support elements (2) comprise fractured parts (2.9) which connect to the slab (1.3) and which manoeuvre and permit fixation to the tiles (1.1).

This mounting also comprises the combination of longitudinal profiles (3) and transversal profiles (4) through sliding connection means used in the aforementioned embodiments described, which comprise a combination of a guide housing in the longitudinal profile (3) and a sliding part joined to the support elements (2). In the preferred embodiment this connection is made with bolts screwed to the sliding part.

Figure 5 shows a preferred embodiment in which the transversal profile (4) is provided with a T-shaped extension (4.2) in which the solar panel (5) is housed.

Figure 6 shows another embodiment in which the transversal profiles (4) comprise a connection to the longitudinal profiles (3) equal to those represented in previous figures, whereas the means of positioning the solar panels (5) comprise additional fractured parts (4.3, 4.4) which, in combination with the transversal profile, (4), carry out the positioning and fixation of the solar panels (5).

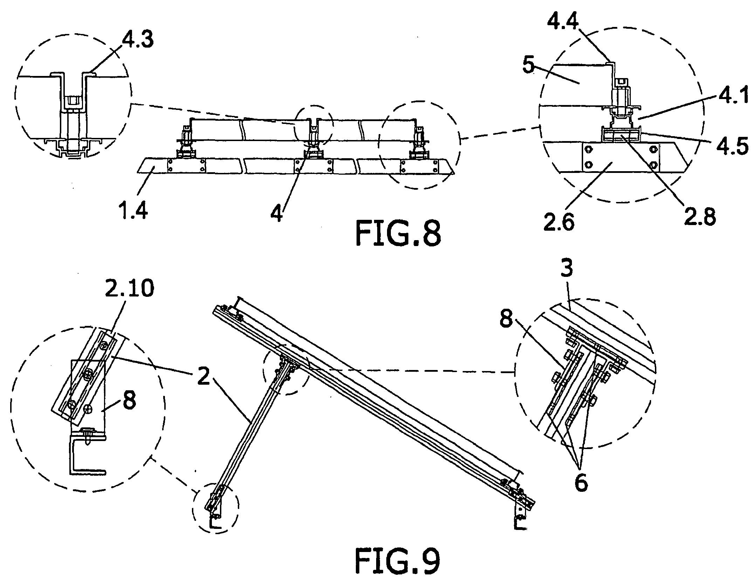

Figures 7 and 8 represent other preferred embodiments in which the frame is mounted on a trapezoidal roof (1.4). In this case the support elements (2) of connection to the trapezoidal roof (1.4) comprise an articulated part whose means of connection with the trapezoidal roof (1.4) comprise a perforated plate (2.6).

In these embodiments the profiles which define planes parallel to the plane of the solar panels consist solely of transversal profiles (4). These transversal profiles (4) comprise sliding means of connection for sliding of the same (4) with respect to the support elements (2). In the preferred embodiment shown in the figures this consists, as in previous cases, of a guide/slide mechanism. Specifically the transversal profile (4) comprises a guide housing (4.5) in which the slide is inserted which consists of a head (2.8) of the perforated plate (2.6).

The transversal profile (4) is provided, as in the previous embodiments, with means for affixing the solar panels (5). These means consist, in the embodiment shown in figure 7 of a T-shaped extension (4.2) or according to the embodiment shown in figure 8 , of fractured parts (4.3, 4.4) which, in combination with the transversal profile (4), hold the solar panel (5).

In the case in which the support elements (2) are profiles, as in the cases shown in figures 1, 2 and 4, these may be provided with means which regulate the inclination of the solar panels (5).

For this purpose the support elements (2) comprise means at their ends which permit regulation of their (2) inclination, and as a result that of the profiles (3, 4) to which they are connected. In the preferred embodiment these means consist of a combination of a U-shaped part (8) which embraces the support element (2) so that this (2) may pivot with respect to the U-shaped part (8). The U-shaped part (8) is joined to a support element (2) by means of a guide/slide mechanism so that in the preferred embodiment the support element comprises at least respective guide housings (2.10) in which a plate (6) is inserted which is arranged joined to the U-shaped part (8).

These same means may be used for the connection of the support element (2) to the longitudinal and transversal profiles (3, 4) which support the solar panel (5).

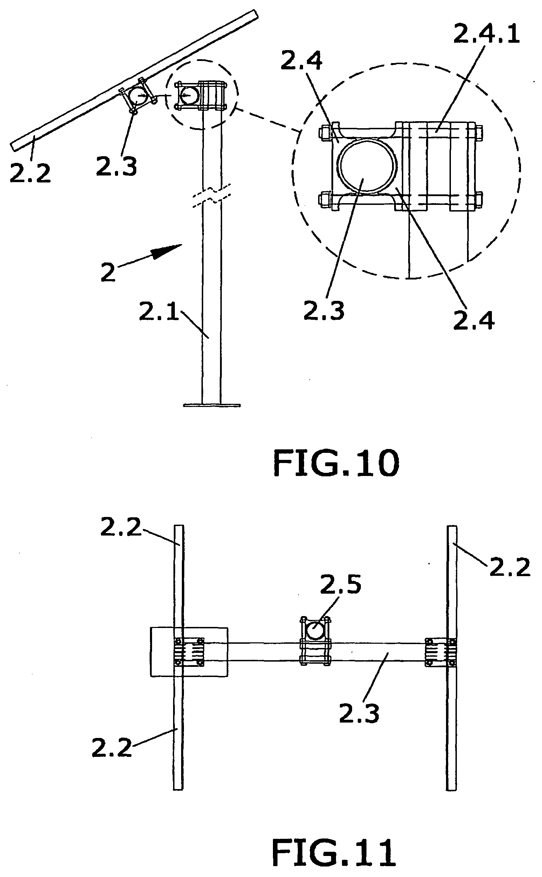

Figure 10 shows a preferred embodiment of the support element (2) in which other embodiments are represented which permit regulation of the inclination of the solar panels (5). The support element (2) of the preferred embodiment comprises at least one base profile (2.1) which in operating position is situated joined to the surface on which the solar panel (5) is to be installed, and a second inclined profile (2.2) on which the longitudinal and transversal profiles (3, 4) which support the solar panel (5)will be affixed. Between both base and inclined profiles (2.1, 2.2) at least one bolt (2.3) is placed with an axis essentially parallel to the floor on which the frame is situated which is provided with connection means both to the base profile (2.1) and to the inclined profile (2.2) in such a way that a kind of hinging is made between both elements (2.1, 2.2) which permits the inclination to be adjusted.

The means which permit connection of the bolt (2.3) to both base and inclined profiles (2.1, 2.2) comprise gripping parts (2.4) which embrace the bolt (2.3) of the axis essentially parallel to the floor and which are provided with holes through which studs (2.4.1) connect to both base and inclined profiles (2.1, 2.2). These means are provided both for the base profile (2.1) and the inclined profile (2.2).

In the preferred embodiment shown in figure 11, the support element (2) is also provided with means which permit regulation of the orientation of the longitudinal and transversal support profiles (3, 4) of the solar panels. These means also comprise a bolt (2.5) the axis of which is essentially situated in a vertical direction so that it permits rotation round a vertical axis. The connection means are the same as those in the case of adjustment of the inclination. The essentially vertical bolt (2.5) is arranged joined to the bolt (2.3) with axis essentially parallel to the floor by means of gripping parts (2.4) which embrace the essentially vertical bolt (2.5) which are provided with holes through which studs are inserted.

It is also possible, as shown in figure 1, for the support feet to be provided with a base profile (2.1) which is arranged inclined with respect to the surface on which the frame is installed.

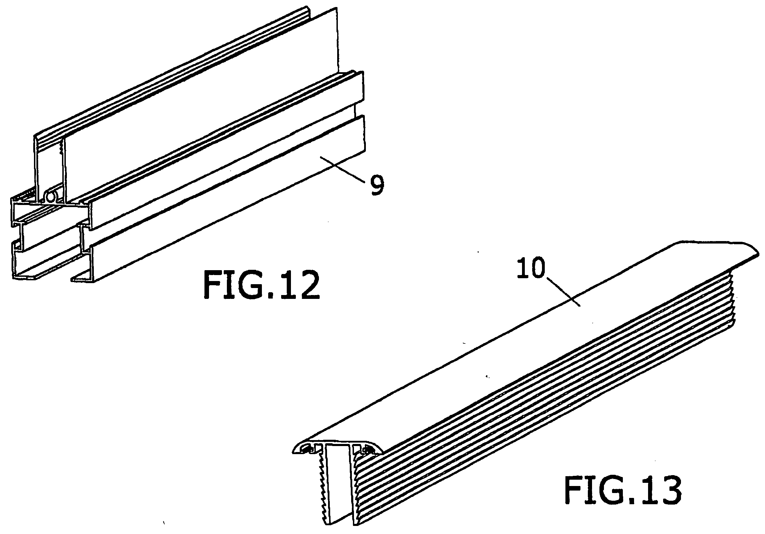

Figure 12 shows a profile alternative to the transversal profile (4) which is shown in figure 5, the profile (9) represented permits solar panels of varying thicknesses to be affixed, used in combination with the complementary profile (10) (figure 13) which serves to affix the modules.

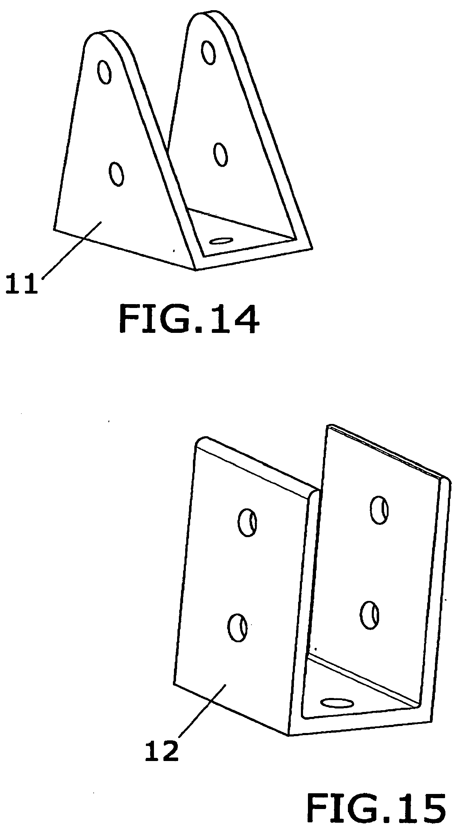

Figure 14, shows an accessory used in those cases in which the arrangement of the bolted connections is perpendicular to those of the connection base.

Figure 15, shows a U-shaped accessory (12) used in those cases in which the arrangement of the bolted connections is perpendicular to those of the connection base.

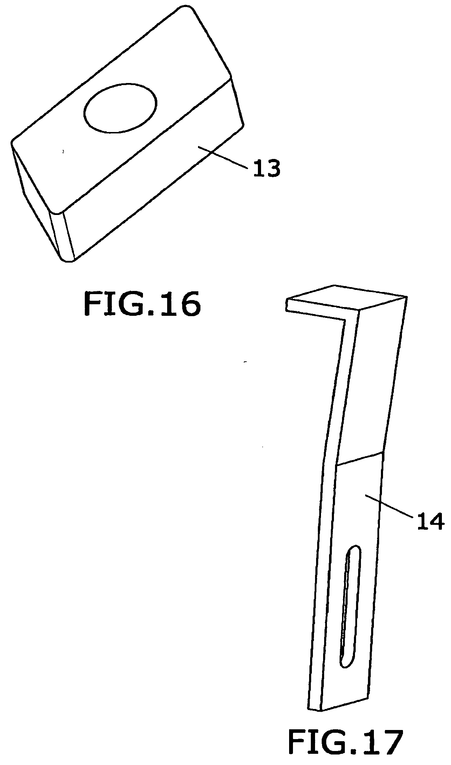

Figure 16 shows an accessory (13) which, housed in the guide, serves to resolve the disadvantage arising from inserting the leads or plates through the start or end of the profiles.

Finally, figure 17 shows an accessory (14) which serves to affix solar panels, irrespective of their thickness, by using a combination of slide and bolts with the gaps or entrances defined in the attachment profiles.

The essential nature of this invention is not altered by any variations in materials, form, size and arrangement of its component elements, which are described in a non-restrictive manner, with this being sufficient to proceed to its reproduction by an expert.

## Claims

1. System for affixing solar panels (5) that consists of a frame comprising at least the following elements:
- support elements (2) which include means of connection to the surface (1.3) on which the frame is placed, and means of connection to profiles (3, 4) which define planes parallel to the plane of the solar panels (5);
- the profiles (3, 4) which define planes parallel to the plane of the solar panels (5) being joined to the support elements (2) which comprise sliding connection means which permit sliding of the profiles (3, 4) with respect to the support elements (2) and means for positioning the solar panels (5);
wherein the profiles (3, 4) which define planes parallel to the plane of the solar panels (5) comprise longitudinal profiles (3) and transversal profiles (4) with the longitudinal profiles (3) being joined to the support elements (2) by the sliding connection means which permit sliding of the longitudinal profiles (3) with respect to the support elements (2) and the transversal profiles (4) being joined to the longitudinal profiles (3) by further sliding connection means which permit transversal sliding of the transversal profiles (4) with respect to the longitudinal profiles (3) and which are provided with means (4.2, 4.3, 4.41) for positioning the solar panels (5), wherein the sliding connection means between the support elements (2) and the longitudinal profiles (3) comprise a guide/slide mechanism with a guide profile and a slide wherein the guide profile is made in the longitudinal profiles (3) which comprise a guide housing (3.2) and the slide comprises a plate (6) which is able to slide in the guide housing (3.2) of the longitudinal profiles (3) which are arranged joined to the corresponding support element (2) by means of bolts which are screwed to the plate (6).

2. System for affixing solar panels according to claim 1, **characterised in that** the means of connection to the surface of the support elements (2) comprise a perforated plate (2.6) and the profiles (3, 4) which define planes parallel to the plane of the solar panels consist of a transversal profile (4) which comprises a guide housing (4.5) in which the slide is inserted which consists of a head (2.8) of the plate (2.6).

3. System for affixing solar panels according to claim 1, **characterised in that** the support elements (2) comprise fractured parts (2.9) which connect to a slab (1.3) and which manoeuvre and permit fixation to a tiles (1.1).

4. System for affixing solar panels according to claim 1, **characterised in that** the support elements (2) in their connection to the concrete base comprise profiles which are provided with perforated plates (2.6) as means of connection to the surface on which the frame is situated.

5. System for affixing solar panels according to claim 1, **characterised in that** the support elements (2) comprise means for adjusting the inclination of the profiles (3, 4) which define planes parallel to the solar panels (5).

6. System for affixing solar panels according to claim 5, **characterised in that** the means for adjusting inclination of the profiles (3, 4) which define planes parallel to the solar panels (5) comprise a base profile (2.1) which in operating position is situated joined to the surface on which the solar panel (5) is installed, a second inclined profile (2.2) on which the longitudinal (3) and tangencial (4) profiles which support the solar panel (5) will be affixed, and between both base and inclined profiles (2.1, 2.2) a bolt (2.3) with an axis essentially parallel to the floor on which the frame is situated which is provided with connection means both to the base profile (2.1) and to the inclined profile (2.2) so that a type of hinging is made between the base profile (2.1) and the second inclined profile (2.2) which permits adjustment of the inclination of the second inclined profile (2.2) and wherein the means for adjusting inclination further comprise gripping parts (2.4) which embrace the bolt (2.3) and which are provided with holes through which studs (2.4.1) connect to both base and inclined profiles (2.1, 2.2), these gripping parts (2.4) being provided both for the base profile (2.1) and the inclined profile (2.2).

7. System for affixing solar panels according to claim 5, **characterised in that** the means for regulating inclination of the solar panels (5) comprise a U shaped part (8) which grips the support element (2) connecting to the same (2) so that it rotates with respect to the U-shaped part (8), where the U-shaped part (8) joins to the support element (2) by means of a guide/slide mechanism and the support element (2) comprises at least respective guide housings (2.10) in which a plate (6) is inserted joined to the U-shaped part (8).

8. System for affixing solar panels according to claim 5, **characterised in that** the support elements (2) are provided with means which permit regulation of the orientation of the support profiles (2) of the solar panels (5) which comprise a bolt (2.5) situated essentially in a vertical direction permitting rotation round a vertical axis, and where said bolt (2.5) is joined to the bolt (2.3) with an axis essentially parallel to the floor on which the essentially horizontal frame is situated by means of gripping parts (2.4) which embrace the bolt (2.5) situated essentially in horizontal direction which is provided with holes through which studs with nuts are inserted.

9. System for affixing solar panels according to claim 1, **characterised in that** the sliding connection between the longitudinal (3) and transversal (4) profiles is made through a combination of a guide/slide mechanism where the guide profile is situated in the longitudinal profile (3) by means of a guide housing (3.1), the slide is a plate (6) which is inserted in the guide housing (3.1) and which is arranged joined to the transversal profile (4) and the means of transversal sliding of the transversal profiles (4) with respect to the longitudinal profiles (3) comprise in their lateral walls a guide housing (4.1), for a second essentially L-shaped slide (7) which is provided with a flange (7.1) which is inserted in the guide housing (4.19 and the L-shaped part is arranged joined to the longitudinal profile (3) by means of an intermediate plate (6) through bolted connections.

10. System for affixing solar panels according to claim 1, **characterised in that** the means of the transversal profiles (4) which permit situation of the ends of the solar panels (5) consist of a T-shaped extension in which the solar panel (5) is housed.

11. System for affixing solar panels according to claim 1, **characterised in that** the means of the transversal profiles (4) which permit situation of the ends of the solar panels (5) consist of an additional fractured part (4.4) which, in combination with the transversal profile, (4) position the solar panels (5).

## Patentansprüche

1. System zum Befestigen von Sonnenkollektoren (5), das aus einem Rahmen besteht, umfassend mindestens die folgenden Elemente:
- Trägerelemente (2), die Mittel zum Verbinden mit der Fläche (1.3) einschließen, auf der der Rahmen platziert wird, und Mittel zum Verbinden mit Profilen (3, 4), die Ebenen parallel zu der Ebene der Sonnenkollektoren (5) definieren;
- wobei die Profile (3, 4), die Ebenen parallel zu der Ebene der Sonnenkollektoren (5) definieren, mit den Trägerelementen (2) verbunden sind, die Gleitverbindungsmittel, welche das Gleiten der Profile (3, 4) in Bezug auf die Trägerelemente (2) ermöglichen, und Mittel zum Positionieren der Sonnenkollektoren (5) umfassen;
wobei die Profile (3, 4), die Ebenen parallel zu der Ebene der Sonnenkollektoren (5) definieren, Längsprofile (3) und Querprofile (4) umfassen, wobei die Längsprofile (3) mittels der Gleitverbindungsmittel, welche das Gleiten der Längsprofile (3) in Bezug auf die Trägerelemente (2) ermöglichen, mit den Trägerelementen (2) verbunden sind und die Querprofile (4) mittels weiterer Gleitverbindungsmittel, welche das quer verlaufende Gleiten der Querprofile (4) in Bezug auf die Längsprofile (3) ermöglichen und welche mit Mitteln (4.2, 4.3, 4.4) zum Positionieren der Sonnenkollektoren (5) versehen sind, mit den Längsprofilen (3) verbunden sind, wobei die Gleitverbindungsmittel zwischen den Trägerelementen (2) und den Längsprofilen (3) einen Führung-/Gleitmechanismus mit einem Führungsprofil und einem Schlitten umfassen, wobei das Führungsprofil in den Längsprofilen (3) eingerichtet ist, die ein Führungsgehäuse (3.2) umfassen, und der Schlitten eine Platte (6) umfasst, der in das Führungsgehäuse (3.2) der Längsprofile (3) gleiten kann, die mittels an der Platte (6) angeschraubten Schrauben verbunden mit dem entsprechenden Trägerelement (2) angeordnet sind.

2. System zum Befestigen von Sonnenkollektoren nach Anspruch 1, **dadurch gekennzeichnet, dass** die Mittel zum Verbinden mit der Fläche der Trägerelemente (2) eine perforierte Platte (2.6) umfassend und dass die Profile (3, 4), die Ebenen parallel zu der Ebene der Sonnenkollektoren definieren, aus einem Querprofil (4) bestehen, das ein Führungsgehäuse (4.5) umfasst, in das der Schlitten eingesetzt wird, der aus einem Kopf (2.8) der Platte (2.6) besteht.

3. System zum Befestigen von Sonnenkollektoren nach Anspruch 1, **dadurch gekennzeichnet, dass** die Trägerelemente (2) gebrochene Teile (2.9) umfassen, die mit einer Tafel (1.3) verbunden sind und die sich bewegen und die Befestigung an Ziegeln (1.1) ermöglichen.

4. System zum Befestigen von Sonnenkollektoren nach Anspruch 1, **dadurch gekennzeichnet, dass** die Trägerelemente (2) in ihrer Verbindung zu der Betonbasis Profile umfassen, die mit perforierten Platten (2.6) als Mittel zum Verbinden mit der Fläche, auf der sich der Rahmen befindet, versehen sind.

5. System zum Befestigen von Sonnenkollektoren nach Anspruch 1, **dadurch gekennzeichnet, dass** die Trägerelemente (2) Mittel zum Justieren der Neigung der Profile (3, 4), die Ebenen parallel zu den Sonnenkollektoren (5) definieren, umfassen.

6. System zum Befestigen von Sonnenkollektoren nach Anspruch 5, **dadurch gekennzeichnet, dass** die Mittel zum Justieren der Neigung der Profile (3, 4), die Ebenen parallel zu den Sonnenkollektoren (5) definieren, ein Grundprofil (2.1), das sich in Betriebsposition verbunden mit der Fläche, auf die der Sonnenkollektor (5) installiert ist, befindet, ein zweites, geneigtes Profil (2.2), auf dem die Längsprofile (3) und die Querprofile (4), die den Sonnenkollektor (5) tragen, befestigt werden, und zwischen dem Grundprofil und dem geneigten Profil (2.1, 2.2) eine Schraube (2.3) mit einer Achse im Wesentlichen parallel zu dem Boden, auf dem sich der Rahmen befindet, umfassen, die mit Verbindungsmitteln sowohl zu dem Grundprofil (2.1) als auch zu dem geneigten Profil (2.2) versehen ist, sodass eine Art von Gelenk zwischen dem Grundprofil (2.1) und dem zweiten geneigten Profil (2.2) hergestellt wird, dass das Justieren der Neigung des zweiten geneigten Profils (2.2) ermöglicht, und wobei die Mittel zum Justieren der Neigung weiterhin Greifteile (2.4) umfassen, die die Schraube (2.3) umgeben und die mit Löchern versehen sind, durch die Stiftschrauben (2.4.1) sowohl mit dem Grundprofil als auch mit dem geneigten Profil (2.1, 2.2) verbunden sind, wobei die Greifteile (2.4) sowohl für das Grundprofil (2.1) als auch das geneigte Profil (2.2) vorgesehen sind.

7. System zum Befestigen von Sonnenkollektoren nach Anspruch 5, **dadurch gekennzeichnet, dass** die Mittel zum Regeln der Neigung der Sonnenkollektoren (5) ein U-förmiges Teil (8) umfassen, das das Trägerelement (2) greift und damit (2) verbunden ist, sodass es sich in Bezug auf das U-förmige Teil (8) dreht, wo das U-förmige Teil (8) mit dem Trägerelement (2) mittels eines Führungs-/Gleitmechanismus verbunden ist, und dass das Trägerelement (2) mindestens jeweils Führungsgehäuse (2.10) umfasst, in die eine Platte (6) eingesetzt und mit dem U-förmigen Teil (8) verbunden ist.

8. System zum Befestigen von Sonnenkollektoren nach Anspruch 5, **dadurch gekennzeichnet, dass** die Trägerelemente (2) mit Mitteln bereitgestellt werden, die das Regeln der Richtung der Trägerprofile (2) der Sonnenkollektoren (5) ermöglicht und die eine Schraube (2.5) umfassen, die sich im Wesentlichen in einer vertikalen Richtung befindet und die das Drehen um eine vertikale Achse zulässt, und wobei die Schraube (2.5) mit der Schraube (2.3) mit einer Achse im Wesentlichen parallel zu dem Boden, auf dem sicher der im Wesentlichen horizontale Rahmen befindet, mittels Greifteilen (2.4) verbunden ist, die die Schraube (2.5) umgeben, die sich im Wesentlichen in horizontaler Richtung erstreckt, und die mit Löchern versehen sind, durch die Stiftschrauben mit Muttern eingesetzt werden.

9. System zum Befestigen von Sonnenkollektoren nach Anspruch 1, **dadurch gekennzeichnet, dass** die Gleitverbindung zwischen den Längsprofilen (3) und den Querprofilen (4) mittels eines Führungsgehäuses (3.1) durch eine Kombination aus einem Führung-/Gleitmechanismus hergestellt ist, wobei sich das Führungsprofil in dem Längsprofil (3) befindet, dass der Schlitten eine Platte (6) ist, die in das Führungsgehäuse (3.1) eingesetzt ist und die verbundenen mit dem Querprofil (4) angeordnet ist, und dass die Mittel zum Querverschieben der Querprofile (4) in Bezug auf die Längsprofile (3) ein Führungsgehäuse (4.1) in ihren Seitenwänden für einen zweiten im Wesentlichen L-förmigen Schlitten (7) umfassen, der mit einem Flansch (7.1) versehen ist, welcher in das Führungsgehäuse (4.1) eingesetzt ist, und dass der L-förmige Teil mittels einer Zwischenplatte (6) durch Schraubverbindungen verbunden mit dem Längsprofil (3) angeordnet ist.

10. System zum Befestigen von Sonnenkollektoren nach Anspruch 1, **dadurch gekennzeichnet, dass** die Mittel für die Querprofile (4), die die Position der Enden der Sonnenkollektoren (5) ermöglichen, aus einer T-förmigen Verlängerung bestehen, in der der Sonnenkollektor (5) aufgenommen ist.

11. System zum Befestigen von Sonnenkollektoren nach Anspruch 1, **dadurch gekennzeichnet, dass** die Mittel für die Querprofile (4), die die Position der Enden der Sonnenkollektoren (5) ermöglichen, aus einem gebrochenen Teil (4.4) bestehen, dass in Kombination mit dem Querprofil (4) die Sonnenkollektoren (5) positioniert.

## Revendications

1. Système de fixation de panneaux solaires (5) qui consiste en un cadre, comprenant au moins les éléments suivants :
- des éléments de support (2) qui comprennent des moyens de raccordement à la surface (1, 3) sur laquelle le cadre est placé et des moyens de raccordement à des profilés (3, 4) qui définissent des plans parallèles au plan des panneaux solaires (5) ;
- les profilés (3, 4) qui définissent des plans parallèles au plan des panneaux solaires (5) étant reliés aux éléments de support (2) qui comprennent des moyens de raccordement par coulissement qui permettent le coulissement des profilés (3, 4) par rapport aux éléments de support (2) et des moyens de positionnement des panneaux solaires (5) ;
dans lequel les profilés (3, 4) qui définissent des plans parallèles au plan des panneaux solaires (5) comprennent des profilés longitudinaux (3) et des profilés transversaux (4), les profilés longitudinaux (3) étant reliés aux éléments de support (2) par les moyens de raccordement par coulissement qui permettent le coulissement des profilés longitudinaux (3) par rapport aux éléments de support (2) et les profilés transversaux (4) étant reliés aux profilés longitudinaux (3) par d'autres moyens de raccordement par coulissement qui permettent un coulissement transversal des profilés transversaux (4) par rapport aux profilés longitudinaux (3) et qui sont dotés de moyens (4.2, 4.3, 4.4) pour positionner les panneaux solaires (5), dans lequel les moyens de raccordement par coulissement entre les éléments de support (2) et les profilés longitudinaux (3) comprennent un mécanisme de guidage/coulissement avec un profilé de guidage et un curseur, dans lequel le profilé de guidage est réalisé dans les profilés longitudinaux (3) qui comprennent un logement de guidage (3.2) et le curseur comprend une plaque (6) qui est apte à coulisser dans le logement de guidage (3.2) des profilés longitudinaux (3) qui sont disposés reliés à l'élément de support correspondant (2) au moyen de boulons qui sont vissés sur la plaque (6).

2. Système de fixation de panneaux solaires selon la revendication 1, **caractérisé en ce que** les moyens de raccordement à la surface des éléments de support (2) comprennent une plaque perforée (2.6) et les profilés (3, 4) qui définissent des plans parallèles au plan des panneaux solaires consistent en un profilé transversal (4) qui comprend un logement de guidage (4.5) dans lequel le curseur est inséré qui consiste en une tête (2.8) de la plaque (2.6).

3. Système de fixation de panneaux solaires selon la revendication 1, **caractérisé en ce que** les éléments de support (2) comprennent des parties fracturées (2.9) qui se raccordent à une dalle (1.3) et qui manoeuvrent et permettent la fixation aux tuiles (1.1).

4. Système de fixation de panneaux solaires selon la revendication 1, **caractérisé en ce que** les éléments de support (2) dans leur raccordement à la base en béton comprennent des profilés qui sont dotés de plaques perforées (2.6) en guise de moyens de raccordement à la surface sur laquelle le cadre est situé.

5. Système de fixation de panneaux solaires selon la revendication 1, **caractérisé en ce que** les éléments de support (2) comprennent des moyens de réglage de l'inclinaison des profilés (3, 4) qui définissent des plans parallèles aux panneaux solaires (5).

6. Système de fixation de panneaux solaires selon la revendication 5, **caractérisé en ce que** les moyens de réglage de l'inclinaison des profilés (3, 4) qui définissent des plans parallèles aux panneaux solaires (5) comprennent un profilé de base (2.1) qui, dans la position d'opération, est situé relié à la surface sur laquelle le panneau solaire (5) est installé, un second profil incliné (2.2) sur lequel les profilés longitudinaux (3) et tangentiels (4) qui supportent le panneau solaire (5) seront fixés et entre les deux profilés de base et incliné (2.1, 2.2) un boulon (2.3) avec un axe essentiellement parallèle au sol sur lequel le cadre est situé, qui est doté de moyens de raccordement à la fois au profil de base (2.1) et au profil incliné (2.2), de sorte qu'un type d'articulation soit réalisé entre le profilé de base (2.1) et le second profilé incliné (2.2) qui permet le réglage de l'inclinaison du second profilé incliné (2.2) et dans lequel les moyens de réglage de l'inclinaison comprennent en outre des parties de saisie (2.4) qui enserrent le boulon (2.3) et qui sont dotés de trous à travers lesquels des goujons (2.4.1) se raccordent aux deux profilés de base et incliné (2.1, 2.2), ces parties de saisie (2.4) étant prévues à la fois pour le profilé de base (2.1) et le profilé incliné (2.2).

7. Système de fixation de panneaux solaires selon la revendication 5, **caractérisé en ce que** les moyens de régulation de l'inclinaison des panneaux solaires (5) comprennent une partie en forme de U (8) qui saisit l'élément de support (2), se raccordant à celui-ci (2), de sorte qu'il tourne par rapport à la partie en forme de U (8), dans lequel la partie en forme de U (8) se lie à l'élément de support (2) au moyen d'un mécanisme de guidage/coulissement et l'élément de support (2) comprend au moins des logements de guidage respectifs (2.10) dans lesquels une plaque (6) est insérée, reliée à la partie en forme de U (8).

8. Système de fixation de panneaux solaires selon la revendication 5, **caractérisé en ce que** les éléments de support (2) sont dotés de moyens qui permettent la régulation de l'orientation des profilés de support (2) des panneaux solaires (5) qui comprennent un boulon (2.5) situé essentiellement dans une direction verticale, permettant la rotation autour d'un axe vertical et dans lequel ledit boulon (2.5) est relié au boulon (2.3) avec un axe essentiellement parallèle au sol sur lequel le cadre essentiellement horizontal est situé au moyen de parties de saisie (2.4) qui enserrent le boulon (2.5) situé essentiellement dans la direction horizontale qui est doté de trous à travers lesquels des goujons avec des écrous sont insérés.

9. Système de fixation de panneaux solaires selon la revendication 1, **caractérisé en ce que** le raccordement par coulissement entre les profilés longitudinaux (3) et transversaux (4) est réalisé par une combinaison d'un mécanisme de guidage/coulissement, dans lequel le profilé de guidage est situé dans le profilé longitudinal (3) au moyen d'un logement de guidage (3.1) et qui est disposé relié au profilé transversal (4) et les moyens de coulissement transversal des profilés transversaux (4) par rapport aux profilés longitudinaux (3) comprennent dans leurs parois latérales un logement de guidage (4.1), pour un second curseur essentiellement en forme de L (7) qui est doté d'une bride (7.1) qui est insérée dans le logement de guidage (4.19) et la partie en forme de L est disposée reliée au profilé longitudinal (3) au moyen d'une plaque intermédiaire (6) par le biais de raccords boulonnés.

10. Système de fixation de panneaux solaires selon la revendication 1, **caractérisé en ce que** les moyens des profilés transversaux (4) qui permettent la situation des extrémités des panneaux solaires (5) consistent en une extension en forme de T dans laquelle le panneau solaire (5) est logé.

11. Système de fixation de panneaux solaires selon la revendication 1, **caractérisé en ce que** les moyens des profilés transversaux (4) qui permettent la situation des extrémités des panneaux solaires (5) consistent en une partie fracturée supplémentaire (4.4) qui, en combinaison avec le profilé transversal (4), positionne les panneaux solaires (5).
